# EUROPEAN PATENT APPLICATION

(11) **EP 1 052 071 A2**
(43) Date of publication of application: **15.11.2000**
(21) Application number: 00201629.3
(22) Date of filing: 04.05.2000
(51) Int. Cl.: B25J 9/10

(54) **High-speed industrial handler**

(30) Priority: 05.05.1999 IT MI990982
(71) Applicant: VORTEX SYSTEMS S.r.L., I-44030 Fossalta di Copparo Ferrara (IT)
(72) Inventor: Colamussi, Arturo, 44100 Ferrara (IT)
(74) Representative: Parisi, Luigi

(57) **Abstract**

A high-speed industrial handler for handling objects in general between one first position and one second position and vice versa, which comprises on a frame (12) at least one first rod (13) hinged (in D) to the frame (12) and connected by means of a further hinge (in E) to at least one second rod (14) carrying a work tool (P, P-Q), both the at least one first rod (13) and the at least one second rod (14) being operatively connected by means of a respective hinge (in C, F) to an actuator (15, 17, 20; 16, 18, 21; 23, 24), which is in turn connected to the frame (12) by means of a respective hinge (in A, H).

## Description

The present invention refers to a high-speed industrial handler for handling objects in general.

In the field of industrial handlers, generally referred to as robots, various solutions are known for obtaining their movement.

In the present case, industrial handlers with two degrees of freedom are considered, which belong to the category of high-speed handlers for handling objects, examples of these handlers being, in particular, the ones employed in the sector of packaging.

Conventionally, this class of industrial handlers or robots is of the "serial" type; i.e., the handler is made up of a chain of members which starts from a frame of the structure and terminates with a gripping member. It follows that each member of the handler is in all cases connected with no more than two other members, i.e., one preceding it and the other following it in the kinematic chain. It should also be noted that the said kinematic chain is open in the sense that the last member is connected to or provided with the gripping member, and hence is not followed by another member.

The main disadvantages of this type of handler structure are basically two: only the first member of the kinematic chain can be fixed to the frame, and each member of the kinematic chain is moved by all the members set upstream of it and moves all the members set downstream of it.

It is evident that the first drawback pointed out generates an intrinsically not very rigid structure, thus imposing the need for powerful and cumbersome structures to limit the said effect.

In addition, the positioning of the actuators for the members downstream of the first one (i.e., the one fixed to the frame) is problematical and unfavourable. In fact, if each of the actuators is fixed "on board", i.e., at a point corresponding to each joint of the structure, a considerable burden is created from a dynamic standpoint. If, on the other hand, the actuators are set "on the ground", i.e., on the frame of the structure, a considerable burden is created from the point of view of the mechanical construction due to the complexity of the system of transmission of motion.

The effect of the second drawback mentioned above is that the masses to be moved are always considerable, due to the heavy structure of the members, which must constantly work in flexure. This imposes the need to adopt as a counter-measure an oversizing of the actuators, and this in turn renders positioning of the latter even more critical. Deriving from this is a very unbalanced ratio between useful transportable weight (carrying capacity of the structure) and the effective weight of the handler, as well as a limited precision in positioning.

On the other hand, other types of industrial handlers, that are not of the serial type, are known and used; namely, handlers of the so-called "parallel" type or of the "mixed" type.

Handlers of the parallel type (which may be likened to Stewart's platform) generally consist of a main member to which a certain number of articulated "feet" of variable length are connected, the feet being fixed to a frame. Each foot is provided with a linear actuator which defines its length and is fixed to the frame and to the main member by means of ball-and-socket joints. The structure is extremely rigid and light, but it presents the major drawback that it requires kinematic spherical couplings and sliding pairs, both of which are the ones that entail the greatest complexity from the constructional standpoint.

Finally, handlers of the mixed type substantially remain similar to serial ones, in so far as they are in fact conceived as variants of the latter, without there being any significant modification as regards the drawbacks already referred to.

A purpose of the present invention is to provide a high-speed industrial handler for handling objects in general that will overcome the drawbacks previously referred to, thus solving the technical problems involved.

Another purpose of the present invention is to provide an industrial handler which is extremely simple and highly reliable, albeit being able to handle objects at a high speed.

These and other purposes according to the invention are achieved by creating a high-speed industrial handler for handling objects in general, as specified in the attached claims.

The structural and functional characteristics, as well as the advantages, of a handler according to the invention, will emerge more evidently from the following description, which is given merely to provide non-limiting examples, with reference to the attached schematic drawings, in which:
Figure 1 is a side elevation of a first embodiment of a handler according to the invention;
Figure 2 is a side elevation of a second embodiment of a handler according to the invention;
Figures 3 and 4 are views equivalent to that of Figure 2, in different operating positions; and
Figures 5, 6 and 7 are side elevations of further embodiments of a handler according to the invention.

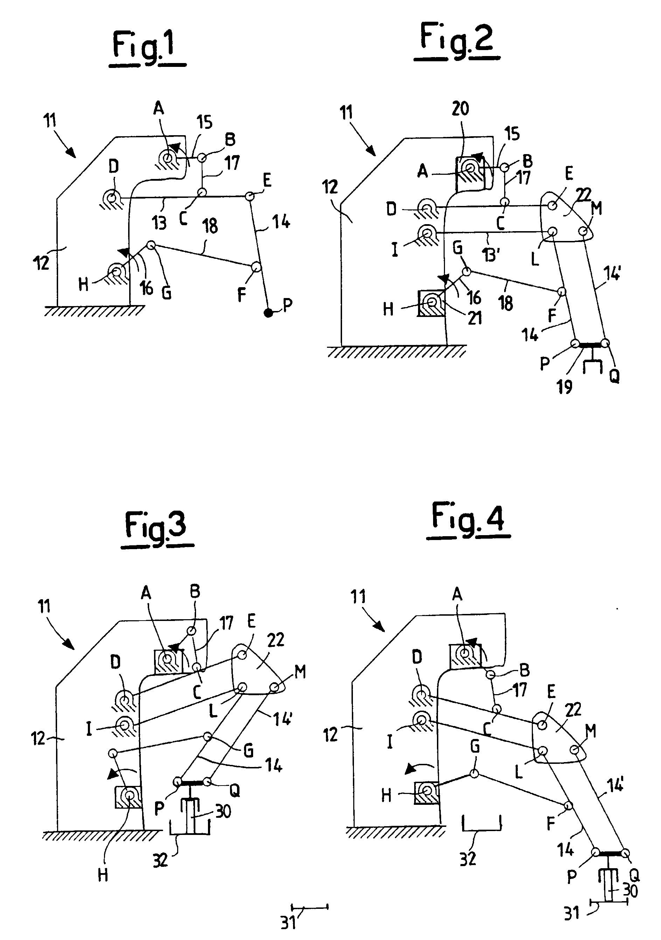

With reference first to Figure 1, a high-speed industrial handler for handling objects in general, according to the present invention, is illustrated and designated as a whole by 11. The handler is used, as in the example shown in Figures 3 and 4, for the handling, between a pick-up position and a put-down position, and vice versa, of at least one object, for example the picking-up of an object 30 from a conveyor 31 and the depositing of the same object 30 inside a container or box 32, and vice versa, and is conceived, according to the invention, in a way that is radically different from the way the handlers that have been known up to now are conceived. It should moreover be noted that in general the handler according to the invention is used for handling a work tool, such as a welding tool, gripping element, etc., between one first position and one second position, and vice versa.

The handler 11 according to the invention presents a kinematic structure of the closed type and, consequently, there is no longer a single chain of members. It is in fact possible to identify interconnected closed loops, which enable the technical problems and drawbacks mentioned previously to be overcome.

Schematically, the handler or robot 11 is obtained from the union of two four-bar linkages ABCD and EFGH (Figure 1), the points A, D and H of which indicate hinges set on a frame 12 of the handler 11. In addition, it should be noted that from the hinge D there extends a first rod 13 (D-E), which in turn carries a second rod 14 (E-P) hinged to the first rod 13 in E.

In the example illustrated, the second rod 14 on one side is hinged to the end of the first rod 13, and on the other side carries, in a point P, for example a gripping element. Again in the example of Figure 1, members 15 (A-B) and 16 (G-H) provide crank mechanisms. In this way, a particular mechanism is obtained that allows the point P two degrees of freedom.

In fact, by appropriately controlling the movement of the two cranks 15 (A-B) and 16 (G-H), it is possible to displace the point P in any position in a plane in the example illustrated, the plane of the sheet within a given working area. This area may be varied according to the particular requirements simply by modifying the length of two connecting rods 17 (B-C) and 18 (F-G) or the position of the hinges about which the two rods 13 and 14 turn. In the example, the said hinges are intermediate and are indicated by C and F on the two main rods or arms 13 and 14 (D-E and E-P).

From this first figure, there evidently appear then the two four-bar linkages ABCD and EFGH which allow the point P two degrees of freedom.

It is to be noted how an extremely small force is required to displace the rod 14, which is set so that it will act and move almost like a pendulum.

Figure 2 shows a second example of embodiment in which members that are the same as those appearing in Figure 1 are designated by the same reference numbers as in Figure 1. In this second embodiment, in order to obtain translation of an end member 19 (P-Q) without any rotation of the latter (Figures 2-4), recourse is had to two additional articulated parallelograms DELI and LMQP, which enable this result to be obtained with minimal encumbrance and disadvantage in terms of weight and compliance. The only members of the structure that are not subjected to simple traction are the two main arms 13 and 14 (L-P and D-E) and the two cranks 15 and 16 (A-B and G-H). Two additional rods 13' (I-L) and 14' (M-Q) have been introduced, the hinges of which, L and M, together with the hinge already mentioned, indicated by E, have been set in a plate-like member 22, which contains the hinges or joints.

In the case where the intermediate hinges C and F are displaced at the ends of the arm 13 and of the arm 14, respectively, a system is obtained in which only two members are subjected to bending, thus reducing to a minimum the mechanical construction of each element and of the joints.

In any case, once the position of the two cranks 15 and 16, which are the two controlled axes of the handler, has been fixed, an intrinsically rigid structure is obtained, in that it may in fact be assimilated to a truss, with the advantage that the sizing of the various members is minimized. The exclusive use of hinges renders the system extremely simple to build and reliable in its operation.

Again thanks to the particular mechanism of the present invention, the two cranks 15 and 16 can be moved by two motors 20 and 21, which are fixed to the frame 12, thus eliminating the problems due to the weight of the cranks, without having to resort to any additional driving system for transmission of motion.

As regards the sizing of the motors 20 and 21, this can be performed with maximum efficiency, in that the mechanism in question makes it possible to have few moving parts, which are made according to criteria of light construction.

In practice, to the two main four-bar linkages there have been added two articulated parallelograms DELI and LMQP which constrain the end gripping member 19 (P-Q) solely to translation in the plane. In this connection, a clear illustration is provided in Figures 3 and 4, which show two different positions that may be assumed by the handler, or rather by its pick-up or gripping member.

For further clarification, other embodiments of the present invention may now be examined.

From these examples it may at once be noted that the inventive characteristics of the handler according to the invention do not vary as a result of a number of modifications, which purely regard possible embodiments, of the basic mechanism so far illustrated.

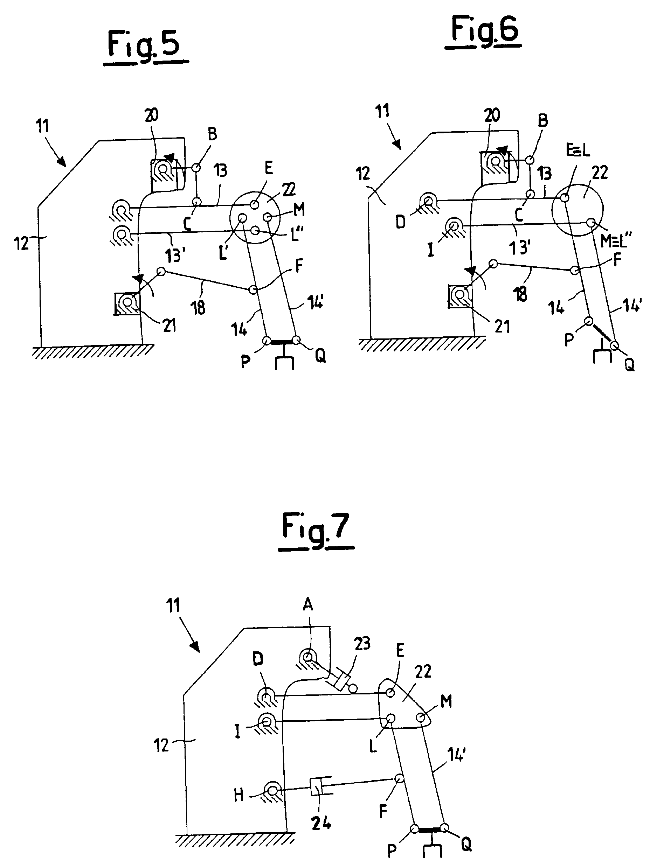

One first further embodiment, and one, moreover, that may be assimilated to the diagram of Figure 2, regards the member 22, which formerly contained the joints E, L and M. This member can be made so as to split the hinge L into two distinct hinges L' and L'', or else so that the said two hinges L' and L'' may be made to coincide with their respective hinges E and M, provided that the parallelogram structure between the points DIL''E and L'MQP is maintained, as shown in Figures 5 and 6.

One second further embodiment regards the articulations previously designated by ABC and HGF. As shown in Figure 7, these may be replaced by a pair of linear actuators 23 and 24 respectively, controlled in such a way that they can move the main rods 13 and 14 in an appropriate manner and in a manner that may be likened to the previous one.

It is clear that associated to the handler will be elements for synchronizing the actuators and for identifying the various positions to be assumed.

In addition, it will be possible to have an arrangement of a number of handlers set in an array, so that they can operate simultaneously, with a single or multiple power drive, in particular for the handling of long pieces and/or the displacement of complex tools.

Of course, further modifications and variations, which are accessible to a person skilled in the branch, are possible without thereby departing from the scope of protection of the present invention as defined in the ensuing claims.

## Claims

1. A high-speed industrial handler for handling objects in general between one first position and one second position and vice versa, which comprises on a frame (12) at least one first rod (13) hinged (in D) to said frame (12) and connected by means of a further hinge (in E) to at least one second rod (14) carrying a work tool (P, P-Q), both the said at least one first rod (13) and the said at least one second rod (14) being operatively connected by means of a respective hinge (in C, F) to an actuator (15, 17, 20; 16, 18, 21; 23, 24), which is in turn connected to said frame (12) by means of a respective hinge (in A, H).

2. A handler according to Claim 1, characterized in that to said first and second rods (13, 14) are associated two further rods (13', 14') to form pairs of rods, it being envisaged that the said pair of first rods (13, 13') and pair of second rods (14, 14') are positioned to form an articulated parallelogram, the first rods (13, 13') being hinged to said frame (12) and to an intermediate member (22), and the second rods (14, 14') being hinged to said intermediate member (22) and to said work tool (P-Q).

3. A handler according to Claim 2, characterized in that the said further two rods (13', 14') are hinged to said intermediate member (22) in two different hinges (L, M).

4. A handler according to Claim 2, characterized in that the said further two rods (13', 14') are hinged to said intermediate member (22) by means of two hinges (L'', M) which are separate from two hinges (E, L') about which the said first and second rods (13, 14) may turn.

5. A handler according to Claim 2, characterized in that the said further two rods (13', 14') are hinged to said intermediate member (22) by means of a single hinge (L'', M), in the same way as the said first and second rods (13, 14) are hinged to said intermediate member (22) by means of a further single, coinciding, hinge (E, L').

6. A handler according to Claim 1, characterized in that said actuator comprises a crank (15, 16) hinged to said frame (12) and to a connecting rod (17, 18), which is in turn hinged to the said at least first rod (13) and second rod (14).

7. A handler according to Claim 1, characterized in that said actuator comprises a linear actuator (23, 24) hinged on one side to said frame (12) and on the other side to the said at least first rod (13) and second rod (14).

8. A handler according to Claim 1, characterized in that said work tool consists of a gripping element (P, P-Q) which is displaceable between a pick-up position and a put-down position for picking up or putting down at least one object, and vice versa.

9. A handler according to Claim 1, characterized in that it can be associated to further identical handlers set in array, there being provided a common power drive.
